# EUROPÄISCHE PATENTSCHRIFT

(11) **EP 4 187 110 B1**
(45) Veröffentlichungstag und Bekanntmachung des Hinweises auf die Patenterteilung: **01.01.2025**
(21) Anmeldenummer: 21211300.5
(22) Anmeldetag: 30.11.2021
(51) Int. Cl.: F16B 7/00

(54) **GELENKVERBINDER ZUM VERBINDEN MEHRERER BAUTEILE IN EINEM VERKEHRSMITTEL**
JOINT CONNECTOR FOR CONNECTING A PLURALITY OF COMPONENTS IN A VEHICLE
CONNECTEUR D'ARTICULATION PERMETTANT DE RELIER PLUSIEURS COMPOSANTS DANS UN MOYEN DE TRANSPORT

(43) Veröffentlichungstag der Anmeldung: 31.05.2023
(73) Patentinhaber: Airbus Operations GmbH, 21129 Hamburg (DE)
(72) Erfinder: BENTHIEN, Hermann, 21129 Hamburg (DE); POPPE, Andreas, 21129 Hamburg (DE)
(74) Vertreter: LKGLOBAL Lorenz & Kopf Patentanwalt Attorney at Law PartG mbB

(56) Entgegenhaltungen:
- DE-C2- 19 839 701
- JP-A- 2001 289 211

## Beschreibung

### Technisches Gebiet

Die Erfindung betrifft einen Gelenkverbinder zum Verbinden mehrerer Bauteile in einer Struktur eines Verkehrsmittels, eine Fachwerkstruktur für einen Innenraum eines Verkehrsmittels sowie ein Verkehrsmittel.

### Technischer Hintergrund

Zum Anbinden von Einbauelementen in Fahrzeugen können verschiedene Halter, Verbinder und Vorrichtungen eingesetzt werden. Ihre Ausgestaltung hängt von der Beschaffenheit, der Größe, des Gewichts und der Einbauposition der betreffenden Einbauelemente ab. Sitze und andere Einrichtungen werden oftmals an bodenseitigen Befestigungsschienen befestigt. Einbauelemente an einer Decke einer Fahrzeugkabine werden indes oft durch fachwerkartige Rahmenkonstruktionen befestigt.

So zeigt etwa DE 19839701 C2 eine Gepäckablageanordnung. DE 19633469 C1 zeigt eine Vorrichtung zum Halten von Gepäckablagen in Flugzeugkabinen, bei denen u. a. Seile und Bänder zum Halten eingesetzt werden. Bei bekannten Einrichtungen kann aufwändig sein, bauteilbedingte und fertigungsbedingte Toleranzen bei der Anbindung der Einbauelemente auszugleichen. Ein Gelenkverbinder ist aus der JP 2001 289211 A bekannt.

Es kann als eine Aufgabe der Erfindung betrachtet werden, einen Verbinder zum Verbinden mehrerer Bauteile in einem Innenraum eines Verkehrsmittels vorzuschlagen, der in der Lage ist, eine einfache Montage und einen einfachen Toleranzausgleich zu ermöglichen, wobei insbesondere eine universelle Anpassung an Kraftwinkel und Fertigungstoleranzen ermöglicht wird.

Die Aufgabe wird gelöst durch einen Gelenkverbinder mit den Merkmalen des unabhängigen Anspruchs 1. Vorteilhafte Ausführungsformen und Weiterbildungen sind den Unteransprüchen der nachfolgenden Beschreibung zu entnehmen.

Es wird ein Gelenkverbinder zum Verbinden mehrerer Bauteile in einer Struktur eines Verkehrsmittels vorgeschlagen, der Gelenkverbinder aufweisend einen Außenkäfig, mindestens zwei erste Anschlussstäbe, die jeweils an einem Ende eine erste Gelenkpfanne aufweisen, und eine Gleiteinrichtung, wobei der Außenkäfig mehrere erste Öffnungen aufweist, die in einer ersten gemeinsamen Ebene liegen und zum Durchführen der ersten Anschlussstäbe von einer Innenseite des Außenkäfigs nach außen ausgebildet sind, wobei die ersten Öffnungen derart dimensioniert sind, dass die ersten Gelenkpfannen jeweils mit einer ersten Außenfläche in einem bündigen Flächenkontakt mit einer ersten Innenrandfläche einer der ersten Öffnungen stehen, wobei die Gleiteinrichtung dazu ausgebildet ist, einen bündigen Flächenkontakt mit ersten Innenflächen der ersten Gelenkpfannen einzugehen, sodass die bündigen Flächenkontakte mit den ersten Innenrandflächen gehalten werden.

Der Gelenkverbinder ist eine Komponente, welche dazu befähigt ist, mehrere Bauteile, insbesondere stabförmige Bauteile, miteinander zu verbinden. Der Gelenkverbinder kann einen Knotenpunkt in einer Fachwerkstruktur ausbilden. Die Ausrichtung der an dem Knotenpunkt befestigten Bauteile zueinander ist in einem gewissen Rahmen flexibel, sodass dadurch konstruktionsbedingte Toleranzen ausgleichbar sind.

Die ersten Anschlussstäbe sind als längliche Elemente zu verstehen, welche lediglich an einem Ende die erste Gelenkpfanne aufweisen. Diese können als schalenförmiger Abschnitt mit einer sphärisch geformten ersten Innenfläche ausgebildet sein. Die ersten Gelenkpfannen können weiterhin auch eine sphärisch geformte Außenfläche umfassen, die von der Innenfläche abgewandt ist und ebenso ein Gleiten darauf ermöglichen.

Die ersten Gelenkpfannen werden von dem Außenkäfig und der Gleiteinrichtung eingeschlossen. Die ersten Innenflächen der ersten Gelenkpfannen liegen dabei auf der Gleiteinrichtung und können dort eine Gleitbewegung ausführen. Die Gleitbewegungen könnte dabei derart erfolgen, dass eine Mittelachse des betreffenden ersten Anschlussstabes stets durch ein Zentrum der Gleiteinrichtung verläuft. Die erste Kugelpfanne kann folglich auf einem sphärischen Flächenabschnitt der Gleiteinrichtung bewegt werden.

Der Außenkäfig hält die ersten Anschlussstäbe in ihrer vorgesehenen Position, verhindert jedoch nicht eine leichte Relativbewegung zu ihrer Ausrichtung. Dafür weist der Außenkäfig die ersten Öffnungen auf, durch die sich die ersten Anschlussstäbe erstrecken. Die ersten Öffnungen weisen jeweils eine erste Innenrandfläche auf, die bevorzugt sphärisch geformt ist und der betreffenden ersten Außenfläche der ersten Gelenkpfanne zugeordnet ist. Die Außenfläche der ersten Gelenkpfanne steht dann in einem bündigen Flächenkontakt mit der betreffenden ersten Innenrandfläche. Zum Durchführen der Relativbewegung sind die erste Innenrandfläche und die erste Außenfläche korrespondierend zueinander geformt.

Die ersten Anschlussstäbe liegen in der ersten gemeinsamen Ebene und können folglich einer Teilebene einer den Gelenkverbinder aufweisenden Fachwerkstruktur zugeordnet sein. Enden der ersten Anschlussstäbe, die von den ersten Gelenkpfannen abgewandt sind, könnten Eingriffsmittel zum Verbinden mit Fachwerkstäben oder anderen Bauteilen aufweisen. Die Eingriffsmittel können Außengewinde, Innengewinde, Befestigungselemente wie Querbohrungen oder Klemmverbinder aufweisen. Die ersten Anschlussstäbe könnten dadurch eine begrenzte Längenerstreckung aufweisen, die lediglich zum Herausführen der Eingriffsmittel dient.

Mit dem erfindungsgemäßen Gelenkverbinder kann eine hochfeste, positionsvariable Verbindung von Elementen einer Fachwerkstruktur zur Verwendung in einem Verkehrsmittel erreicht werden. Die Ausrichtungen der ersten Anschlussstäbe sind in einem gewissem Rahmen einstellbar. Durch die Kombination aus dem Außenkäfig und der innenliegenden Gleiteinrichtung können Druck- und Zugkräfte übertragen werden.

Der Außenkäfig könnte einen ersten Außenkäfigabschnitt und einen zweiten Außenkäfigabschnitt aufweisen, die voneinander trennbar sind. Der Außenkäfig ist folglich teilbar. Durch Trennen des ersten Außenkäfigabschnitts und des zweiten Außenkäfigabschnitts voneinander können die ersten Anschlussstäbe etwa vor dem Zusammensetzen des Außenkäfigs in die entsprechenden ersten Öffnungen eingesteckt werden. Damit können die Gelenkpfannen etwas größer dimensioniert werden, da sie nicht durch eine entsprechende Öffnung von außen in den Außenkäfig hineingesteckt werden müssen. Es könnte sinnvoll sein, den Außenkäfig in zwei Hälften zu unterteilen, die dann weitgehend gleich groß sind. Es wäre indes auch denkbar, als ersten Außenkäfigabschnitt eine Art Gehäuse zu verwenden und als zweiten Außenkäfigabschnitt einen den ersten Außenkäfig schließenden Gehäusedeckel. Der Gehäusedeckel kann dann von dem Gehäuse abmontiert werden, um die ersten Anschlussstäbe in den Außenkäfig einzuführen.

Zwei aufeinanderfolgende erste Öffnungen könnten jeweils einen Winkel von 90° in der ersten gemeinsamen Ebene zueinander einschließen. Die beiden ersten Anschlussstäbe stehen folglich senkrecht zueinander in der ersten gemeinsamen Ebene. Es ist denkbar, auch drei oder vier erste Öffnungen zu verwenden, wobei zwischen zwei aufeinander folgenden ersten Öffnungen jeweils ein Winkel von 90° vorgesehen ist. Bei der Verwendung eines teilbaren Außenkäfigs können auch vier derart verteilte erste Öffnungen möglich sein. Beide Außenkäfigabschnitte könnten etwa jeweils mit zwei ersten Anschlussstäben ausgestattet und dann zusammengesetzt werden.

In einer Ausführungsform könnte der Außenkäfig mindestens eine zweite Öffnung aufweisen, die eine Öffnungsachse aufweist, welche schräg oder quer zu der ersten gemeinsamen Ebene liegt, wobei der Gelenkverbinder mindestens einen zweiten Anschlussstab aufweist, wobei die mindestens eine zweite Öffnung zum Durchführen des mindestens einen zweiten Anschlussstabs von einer Innenseite des Außenkäfigs nach außen ausgebildet ist, und wobei die Gleiteinrichtung mit dem mindestens einen zweiten Anschlussstab gekoppelt ist. Durch den mindestens einen zweiten Anschlussstab kann eine zusätzliche zweite Ebene zu der ersten gemeinsamen Ebene aufgespannt werden. Die zweite Ebene könnte insbesondere vertikal zu der ersten gemeinsamen Ebene verlaufen. Es sind jedoch auch Winkelbereiche von 45°-135° und bevorzugt von 60° bis 120° denkbar. Die mindestens eine zweite Öffnung könnte analog zu den ersten Öffnungen ausgebildet sein. Die Kopplung könnte etwa durch Einschrauben des mindestens einen zweiten Anschlussstabs in die Gleiteinrichtung erreicht werden. Die Gleiteinrichtung könnte zum stoß- oder schwingungsgedämpften Aufnehmen des mindestens einen zweiten Anschlussstabs einen Stoßdämpfer aufweisen, der insbesondere aus einem Kunststoff oder einem Gummi hergestellt ist oder eine solche Beschichtung aufweist.

Der mindestens eine zweite Anschlussstab könnte an einem Ende eine zweite Gelenkpfanne aufweisen, wobei die mindestens eine zweite Öffnung derart dimensioniert ist, dass die betreffende zweite Gelenkpfanne mit einer zweiten Außenfläche in einem bündigen Flächenkontakt mit einer zweiten Innenrandfläche der mindestens einen zweiten Öffnung steht, und wobei die Gleiteinrichtung dazu ausgebildet ist, einen bündigen Flächenkontakt mit zweiten Innenflächen der zweiten Gelenkpfannen einzugehen, sodass die bündigen Flächenkontakte mit den zweiten Innenrandflächen gehalten werden. Der mindestens eine zweite Anschlussstab kann folglich ebenso eine Relativbewegung durchführen, sodass ein Toleranzausgleich ermöglicht wird. Auch hier wäre sinnvoll, den Außenkäfig zu unterteilen. Sollte dies nicht möglich oder gewünscht sein, ist denkbar, den Außenkäfig entsprechend zu dimensionieren, sodass eine ausreichende Anordnung von Öffnungen sowie mindestens eine separate Einstecköffnung zum Einbringen aller Anschlussstäbe vorgesehen ist.

In einer Ausführungsform könnte die Gleiteinrichtung mit mindestens einem dritten Anschlussstab verbunden sein, wobei der dritte Anschlussstab einen Winkel zwischen 20° und 160° mit der ersten gemeinsamen Ebene einschließt und sich durch eine dritte Öffnung des Außenkäfigs nach außen erstreckt. Der dritte Anschlussstab liegt außerhalb der ersten Ebene und, falls eine vorangehend genannte zweite Ebene vorgesehen ist, auch außerhalb der zweiten Ebene. Der dritte Anschlussstab könnte eine Diagonalstrebe sein, welche das zusätzliche Abstützen von Bauteilen zum Erfüllen hochfester Verbindungen zum Abstützen von Lasten in Längsrichtung eines Verkehrsmittels ermöglicht, die etwa zulassungsrelevant sein können.

Der dritte Anschlussstab könnte starr mit der Gleiteinrichtung verbunden sein. Der dritte Anschlussstab kann damit eine ideale Lasteinleitung gewährleisten. Da die Gleiteinrichtung stets eine Relativbewegung der mit ihr in Berührung stehenden Gelenkpfannen erlaubt, kann die starre Verbindung ermöglicht werden, ohne die einfache Einstellbarkeit der Gelenkverbindung zu verhindern.

Die ersten Innenflächen könnten sphärisch geformt sein, wobei eine äußere Oberfläche der Gleiteinrichtung an die ersten Innenflächen angepasst ist, sodass eine Relativbewegung der ersten Innenflächen auf der äußeren Oberfläche der Gleiteinrichtung ermöglicht ist. Hierdurch wird die Einstellbarkeit des Gelenkverbinders realisiert.

In einer Ausführungsform könnte der Gelenkverbinder ferner mindestens einen vierten Anschlussstab aufweisen, der an einem Ende eine vierte Gelenkpfanne aufweist, wobei die vierte Gelenkpfanne von einer der ersten Gelenkpfannen und dem Außenkäfig umschlossen ist und der vierte Anschlussstab sich durch eine vierte Öffnung nach außen erstreckt. Damit wird eine zusätzliche Fachwerkebene ermöglicht, ohne dass die vierten Gelenkpfannen neben den ersten Gelenkpfannen an der Gleiteinrichtung platziert werden müssen. Insbesondere zum Gewährleisten einer um 45° versetzten Ebene zu der ersten gemeinsamen Ebene kann dies sinnvoll sein. Die vierten Gelenkpfannen und die ersten Gelenkpfannen überschneiden sich in ihrer Ausrichtung und folgen in radialer Richtung aufeinander. Werden die ersten Gelenkpfannen mit einer sphärischen Außenfläche versehen, an die die vierten Innenflächen der vierten Gelenkpfannen angepasst sind, kann eine unbeschränkte Bewegbarkeit der vierten Anschlussstäbe erreicht werden.

Der Außenkäfig könnte einstückig ausgebildet sein und mindestens eine erste Einstecköffnung aufweisen, durch die die ersten Anschlussstäbe mit den ersten Gelenkpfannen einführbar und in erste Öffnungen steckbar sind. Die ersten Anschlussstäbe werden folglich durch die mindestens eine erste Einstecköffnung mit ihren Gelenkpfannen zusammen in den Außenkäfig eingesteckt. Dabei wird zunächst ein der ersten Gelenkpfanne abgewandtes Ende in die betreffende Einstecköffnung eingesteckt und zu der ersten Öffnung geführt, bis die Außenfläche der betreffenden ersten Gelenkpfanne mit dem Außenkäfig in Kontakt steht. Die mindestens eine erste Einstecköffnung sollte folglich derart ausgebildet sein, dass die ersten Gelenkpfannen hindurchpassen.

Der Außenkäfig könnte zumindest bereichsweise kugelförmig ausgebildet sein. Damit wird sehr einfach eine sphärische Formgebung ermöglicht. Insbesondere ist es sinnvoll, den Außenkäfig als eine Hohlkugel auszubilden und je nach Anforderung eine bestimmte Anordnung von Öffnungen einzubringen.

Die Gleiteinrichtung könnte einen Gleitstückhalter aufweisen, der durch die mindestens eine erste Einstecköffnung in den Außenkäfig steckbar ist, wobei für jeden ersten Anschlussstab ein Gleitstück vorgesehen ist, das in eine korrespondierend angeordnete radiale Vertiefung des Gleitstückhalters einsteckbar ist, und wobei der Außenkäfig mindestens eine zweite Einstecköffnung aufweist, durch die die Gleitstücke nacheinander unter Rotation des Gleitstückhalters in die radialen Vertiefungen steckbar sind, um sie mit den ersten Innenflächen der ersten Gelenkpfannen in Flächenkontakt zu bringen. Die Kombination aus einem Gleitstückhalter und mehreren Gleitstücken bildet zusammen die Gleiteinrichtung. Statt den Außenkäfig mehrteilig und trennbar zu gestalten, ist die Gleiteinrichtung unterteilt. Es existiert demnach eine erste Einstecköffnung, durch die der Gleitstückhalter von außen in den Außenkäfig einsteckbar ist. Befindet sich ein entsprechender Abschnitt des Gleitstückhalters in dem Außenkäfig, beispielsweise ein End- oder Kopfstück, können anschließend die Gleitstücke eingebracht werden. Der Gleitstückhalter weist hierfür mehrere radiale Vertiefungen auf. Diese weisen eine Erstreckungsachse auf, die quer zu einer Haupterstreckungsachse des Gleitstückhalters verläuft. Befindet sich der Gleitstückhalter in dem Außenkäfig, können die Gleitstücke aus einer radialen Richtung der Haupterstreckungsachse des Gleitstückhalters angenähert und anschließend in eine der radiale Vertiefungen eingesteckt werden. Die Gleitstücke können daher nicht durch die betreffende erste Einstecköffnung eingebracht werden, sondern durch mindestens eine zweite Einstecköffnung. Diese könnte derart platziert sein, dass beispielsweise der Gleitstückhalter in einer Anfangsposition eine der radialen Vertiefungen in einer fluchtenden Position mit der zweiten Einstecköffnung platziert hat. Dann kann ein erstes Gleitstück durch die zweite Einstecköffnung in der radialen Vertiefung eingesetzt werden. Der Gleitstückhalter kann folglich dann um etwa 90° um seine Haupterstreckungsachse gedreht werden, sodass eine nächste radiale Vertiefung an der zweiten Öffnung anliegt und das vorher eingesteckte Gleitstück in den Gleitstückhalter rotiert. In einer entsprechenden Sequenz können nacheinander die Gleitstücke eingesetzt werden. Durch das Rotieren gelangen auch die bereits eingesteckten Gleitstücke in ihre jeweilige Gebrauchsposition. Es ist vorstellbar, dass beispielsweise insgesamt drei Gleitstücke in drei radiale Vertiefungen eingesetzt werden, die um 90° in Umfangsrichtung zueinander versetzt sind. Nach Einsetzen des ersten Gleitstücks erfolgt das Einsetzen eines zweiten Gleitstücks, anschließend eines dritten Gleitstücks und anschließend wird der Gleitstückhalter noch ein weiteres Mal um 90° gedreht. Alle radialen, mit Gleitstücken besetzten Vertiefungen sind dann von der zweiten Einstecköffnung entfernt und befinden sich in einem Flächenkontakt mit den ersten Gelenkpfannen.

Der Gleitstückhalter könnte ein weitgehend quaderförmiges Ende aufweisen, welches Außenflächen aufweist, in denen die radialen Vertiefungen angeordnet sind. Die erste Einstecköffnung wird korrespondieren dazu ausgebildet. Alle weiteren Öffnungen können kreisrund ausgeführt sein. Es ist vorstellbar, dass das quaderförmige Ende abgerundete Kanten aufweist, sodass auch die erste Einstecköffnung abgerundete Ecken umfasst. Durch diese Ausführung könnte die Fertigung vereinfacht werden und gleichzeitig wird ein Benutzer geführt, denn das quaderförmige Ende passt ausschließlich durch die entsprechend viereckig gestaltete Öffnung.

Die Erfindung betrifft ferner eine Fachwerkstruktur für einen Innenraum eines Verkehrsmittels, aufweisend mindestens einen Gelenkverbinder gemäß der vorhergehenden Beschreibung und mehrere Bauteile in Form von Fachwerkstäben, die an dem mindestens einen Gelenkverbinder zum Ausbilden der Fachwerkstruktur angeordnet sind.

Schließlich betrifft die Erfindung ein Verkehrsmittel mit einem Innenraum und mindestens einer darin angeordneten Fachwerkstruktur, wobei mindestens ein Einbauteil an der Fachwerkstruktur angeordnet ist.

Das Einbauteil könnte ein Über-Kopf-Staufach oder ein anderes Einbaumodul sein. Das Einbaumodul könnte beispielhaft ein Teil einer Serviceeinheit (Passenger Service Unit, PSU) sein, die oberhalb von Passagiersitzen angeordnet ist und diverse Einrichtungen für Passagiere bereithält. Insbesondere können dort Einrichtungen angeordnet sein, welche mit Elektrizität, Daten und Luft versorgt werden.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1-6: schematische Darstellungen eines Gelenkverbinders mit einem teilbaren Außenkäfig.
- Fig. 7-13: schematische Darstellungen eines Gelenkverbinders mit einem einstückigen Außenkäfig.
- Fig. 14: eine Fachwerkstruktur in einem Flugzeug.
- Fig. 15: zeigt ein Flugzeug.

### Detaillierte Beschreibung von Ausführungsbeispielen

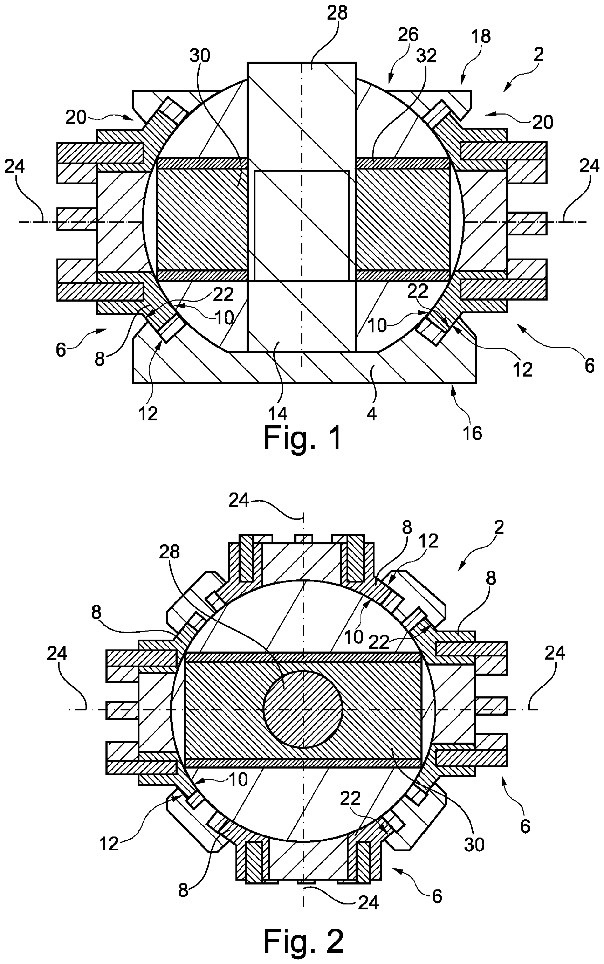

Fig. 1 zeigt einen Gelenkverbinder 2 zum Verbinden mehrerer Bauteile in einer Struktur eines Verkehrsmittels. Der Gelenkverbinder 2 weist einen Außenkäfig 4 und mindestens zwei erste Anschlussstäbe 6 auf. Die ersten Anschlussstäbe 6 weisen jeweils eine erste Gelenkpfanne 8 auf, die jeweils eine erste Innenfläche 10 und eine erste Außenfläche 12 aufweisen. Der Gelenkverbinder 2 weist ferner eine Gleiteinrichtung 14 auf, die in dem Außenkäfig 4 angeordnet ist und mit den ersten Innenflächen 10 in Berührung steht. Die Gleiteinrichtung 14 ist in diesem Fall eine Kugel bzw. eine kugelförmige Komponente. Der Außenkäfig 4 ist in einen ersten Außenkäfigabschnitt 16 und einen zweiten Außenkäfigabschnitt 18 unterteilt, die lösbar miteinander verbunden sind bzw. voneinander getrennt werden können. Durch Trennen der beiden Außenkäfigabschnitte 16 und 18 voneinander können die Gleiteinrichtung 14 und die Gelenkpfannen 8 in den Außenkäfig 4 eingesetzt werden.

Der Außenkäfig 4 weist erste Öffnungen 20 auf, durch die die ersten Anschlussstäbe 6 nach außen ragen. Die ersten Außenflächen 12 stehen mit ersten Innenrandflächen 22 in Flächenkontakt. Hierdurch wird ein Kugelgelenk realisiert, bei dem die ersten Gelenkpfanne 8 positionsvariabel an der Gleiteinrichtung 14 positioniert sind. Im Idealfall sind beide ersten Anschlussstäbe 6 um 180° zueinander versetzt. Ihre Längsachsen 24 können folglich auf einer gemeinsamen Linie liegen. Toleranzbedingt kann dies beim Aufbau einer Fachwerkstruktur jedoch nicht immer erfüllt werden, sodass die beiden Erstreckungsachsen 24 auch schräg bzw. windschief zueinander verlaufen können. Dies wird durch den erfindungsgemäßen Gelenkverbinder 2 ohne weiteres ermöglicht.

Der Außenkäfig 4 kann eine zweite Öffnung 26 aufweisen, durch die sich ein zweiter Anschlussstab 28 erstreckt. Der zweite Anschlussstab 28 ist hier mit der Gleiteinrichtung 14 direkt verbunden. Dazu dient beispielhaft ein integrierter Stoßdämpfer 30, der in einer entsprechenden Querbohrung 32 der Gleiteinrichtung 14 angeordnet ist und eine form- oder kraftschlüssige Verbindung mit dem zweiten Anschlussstab 28 ermöglicht. Der Stoßdämpfer 30 könnte etwa aus einem Kunststoffmaterial ausgebildet sein oder eine Kunststoff- bzw. Gummibeschichtung aufweisen. Dadurch wird eine stoßgedämpfte Verbindung ermöglicht.

In Fig. 2 wird der Gelenkverbinder 2 mit insgesamt vier ersten Anschlussstäben 6 dargestellt. Diese sind um 90° zueinander versetzt und in einer ersten gemeinsamen Ebene angeordnet. Der zweite Anschlussstab 28 ist hier senkrecht auf dieser Ebene angeordnet.

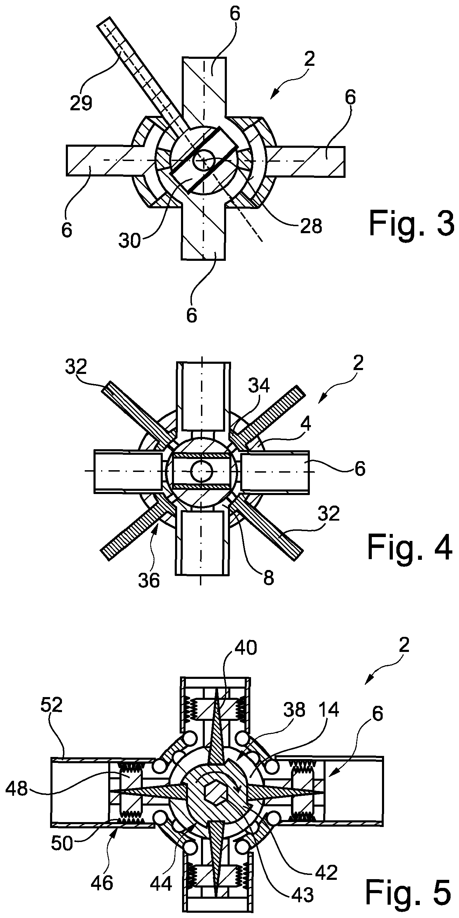

Fig. 3 zeigt den Einsatz eines dritten Anschlussstabs 29, der jedoch quer zu der ersten gemeinsamen Ebene verläuft. Hier wird eine Draufsicht auf den Gelenkverbinder 2 gezeigt. Hier ist ein dritter Anschlussstab 29 in der Zeichnungsebene oben links dargestellt. Dieser weist einen von der Gleiteinrichtung 14 fortlaufend größeren Abstand von der Zeichnungsebene auf. Es handelt sich hierbei beispielsweise um eine Diagonalstrebe, welche direkt mit der Gleiteinrichtung 14 verschraubt sein könnte. Der dritte Anschlussstab 29 könnte sich durch eine dritte Öffnung (hier nicht gezeigt) nach außen erstrecken.

Fig. 4 zeigt den Gelenkverbinder 2 mit vier vierten Anschlussstäben 32, die jeweils eine vierte Gelenkpfanne 34 aufweisen, die von dem Außenkäfig 4 und ersten Gelenkpfannen 8 umschlossen sind. Sie ragen aus vierten Öffnungen 36 aus dem Außenkäfig 4 hinaus. Sie sind relativ zu den ersten Anschlussstäben 6 versetzt und können zudem diagonal verlaufen, d.h. schräg zu der durch die ersten Anschlussstäbe 6 aufgespannten Ebene. Durch einen Flächenkontakt der ersten Gelenkpfannen 8, der vierten Gelenkpfannen 34 und des Außenkäfigs 4 kann eine Relativbewegung sowohl der ersten Anschlussstäbe 6 als auch der vierten Anschlussstäbe 32 und der Gleiteinrichtung 14 erfolgen.

Fig. 5 zeigt die Darstellung aus der Fig. 2, wobei jedoch in der Gleiteinrichtung 14 ein Verschlussmechanismus 38 integriert ist, dem mehrere Keile 40 und ein Verschlusskörper 42 zugeordnet sind. Der Verschlusskörper 42 ist weitgehend scheibenförmig ausgeführt und weist für jeden Keil 40 eine umfangsseitig angeordnete Rampenfläche 44 auf. Die Rampenflächen 44 schließen aneinander an und können durch Rotation des Verschlusskörpers 42 um eine Mittelachse 43 bewegt werden. Die Rampenflächen 44 erweitern sich jeweils in radialer Richtung nach außen und stehen mit den breiteren Seiten der radial angeordneten Verschlusskeile 40 in Kontakt. Durch Rotation des Verschlusskörpers 42 werden die Verschlusskeile 40 durch die Rampenflächen 44 radial nach außen gedrängt.

Die Verschlusskeile 44 werden dadurch in die ersten Anschlussstäbe 6 gedrängt. Dort ist ein Verzahnungspaar 46 mit einer Innenverzahnung 48 und einer Außenverzahnung 50 angeordnet. Die Verschlusskeile 40 drängen durch ihre Keilform bei ihrer radial nach außen gerichteten Bewegung die Innenverzahnung 48 in einer Umfangsrichtung nach außen in die Außenverzahnung 50, sodass eine formschlüssige Verbindung zwischen der Innenverzahnung 48 und der Außenverzahnung 50 hergestellt wird. Die Innenverzahnung 48 ist dabei an dem jeweiligen Anschlussstab 6 angeordnet, während die Außenverzahnung 50 an einer rohrförmigen Erweiterung 52 angeordnet ist, die auf den jeweiligen ersten Anschlussstab 6 gesteckt ist. Die Rotation des Verschlusskörpers 42 um 90° führt folglich dazu, dass alle vier ersten Anschlussstellen 6 mit der jeweiligen rohrförmigen Erweiterung 52 verbunden werden.

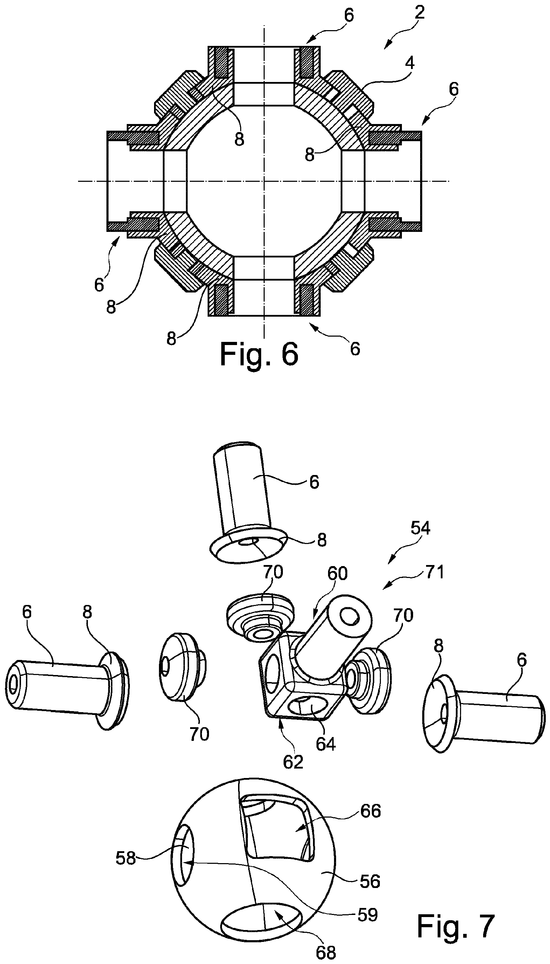

Fig. 6 zeigt eine Draufsicht auf den Gelenkverbinder 2 ohne darin eingebrachten zweiten Anschlussstab 28 bzw. aus einer von dem zweiten Anschlussstab 28 abgewandten Richtung.

Fig. 7 zeigt ein weiteres Ausführungsbeispiel eines Gelenkverbinders 54. Hier ist ein Außenkäfig 56 vorgesehen, der nicht teilbar ist, sondern einstückig ausgeführt ist. Er weist mehrere erste Öffnungen 58 auf, in die die ersten Anschlussstäbe 6 einsteckbar sind. Eine Gleiteinrichtung 71 ist vorgesehen, die einen Gleitstückhalter 60 aufweist, der ein etwa würfelförmiges Ende 62 aufweist. In diesem sind mehrere radiale Vertiefungen 64 angeordnet. Der Gleitstückhalter 60 kann in eine erste Einstecköffnung 66 eingesteckt werden, die an die würfelförmige Form des Endes 62 angepasst ist. Über eine zweite Einstecköffnung 68 sind die ersten Anschlussstäbe 6 derart in den Außenkäfig 56 einführbar, dass sie aus den ersten Öffnungen 58 ragen und die ersten Gelenkpfannen 8 in dem Außenkäfig 56 an entsprechenden ersten Innenrandflächen 59 gehalten werden. Sind die ersten Anschlussstäbe 6 platziert, kann der Gleitstückhalter 60 in die erste Einstecköffnung 66 gesteckt werden. Anschließend können, beispielsweise über eine zweite Einstecköffnung 68, mehrere Gleitstücke 70 nacheinander in die radiale Vertiefungen 64 eingesetzt werden. Hierzu wird der Gleitstückhalter 60 sukzessive gedreht. Anschließend stehen alle Gleitstücke 70 mit den ersten Gelenkpfannen 8 in Flächenkontakt, wie in der Explosionsdarstellung in Fig. 7 angedeutet. Der Gleitstückhalter 60 und die Gleitstücke 70 bilden dabei die Gleiteinrichtung 71.

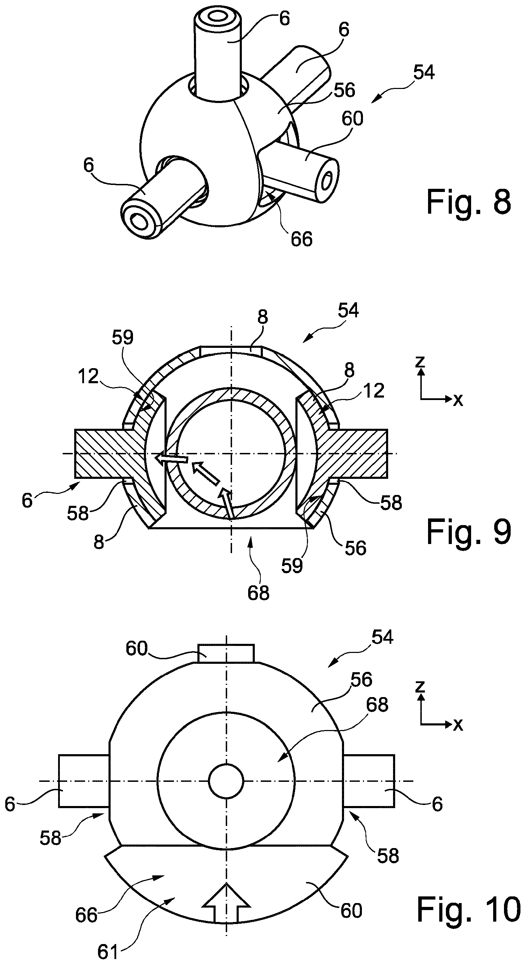

Fig. 8 zeigt den Gelenkverbinder 54 in einem aufgebauten Zustand. Der Gleitstückhalter 60 kann dabei ebenso als Anschlussstab fungieren, sodass in diesem Beispiel der Gelenkverbinder 54 zwei zueinander vertikale Ebenen einer Fachwerkstruktur ausbildet.

Fig. 9 zeigt das Einstecken der ersten Anschlussstäbe 6 durch die zweite Einstecköffnung 68 in einer Schnittdarstellung. Die ersten Kugelpfannen 8 werden dabei in Flächenkontakt mit den ersten Innenrandflächen 59 gebracht.

Fig. 10 zeigt den in der ersten Einstecköffnung 66 platzierten Gleitstückhalter 60 in einer Seitenansicht. Beispielhaft ist dieser so ausgeführt, dass er durch den Außenkäfig 56 durchsteckbar ist, bis eine Anschlagspfanne 61 mit einer Außenseite des Außenkäfigs 56 in Kontakt gerät, sodass der Gleitstückhalter 60 in dem Außenkäfig 56 gehalten wird und an einer der ersten Einstecköffnung 66 gegenüberliegenden ersten Öffnung 58 aus dem Außenkäfig 56 ragt.

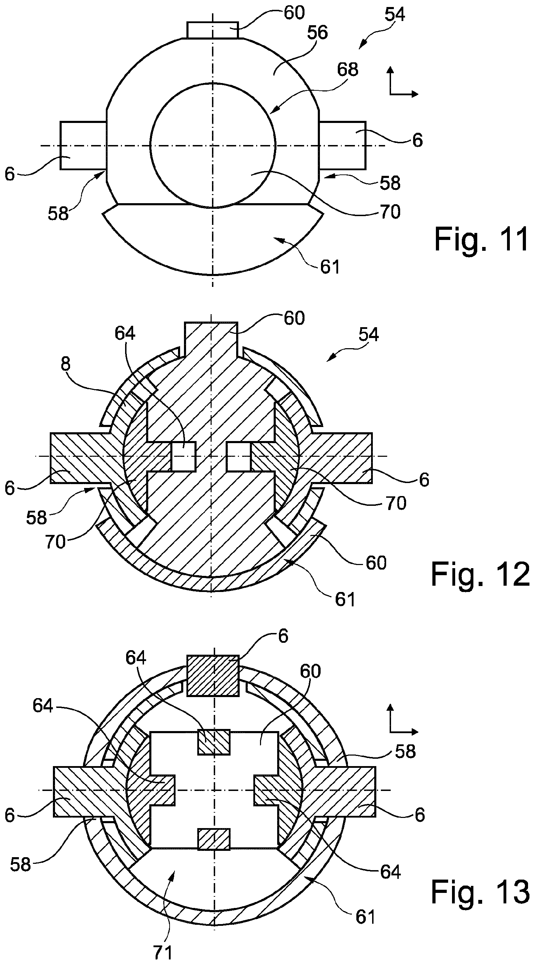

Fig. 11 zeigt ein Gleitstück 70, das in einer der radialen Vertiefungen 64 angeordnet ist. Die Darstellung ist auf die zweite Einstecköffnung 68 gerichtet.

Fig. 12 zeigt die Anordnung nach einer Rotation um eine Haupterstreckungsachse des Gleitstückhalters 60. Fig. 13 zeigt die Ausstattung von drei radialen Vertiefungen mit einem entsprechenden Gleitstück 70, die dann mit allen ersten Gelenkpfannen 8 in Flächenkontakt stehen. Der Gelenkverbinder 54 kann nun verwendet werden.

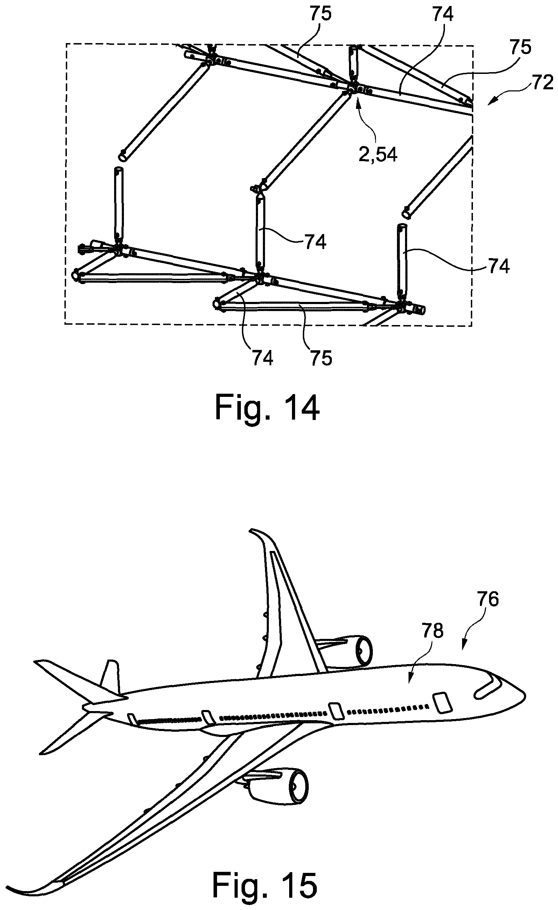

Fig. 14 zeigt eine Fachwerkstruktur 72 mit mehreren Fachwerkstäben 74 und 75, die über Gelenkverbinder 2 bzw. 54 miteinander verbunden sind. Die Fachwerkstäbe 74 können mehrere Ebenen aufspannen, die größtenteils senkrecht zueinander verlaufen. Diagonalstreben 75 können durch entsprechend angeordnete zweite oder dritte Anschlussstäbe angebunden werden, wie vorangehend dargestellt.

Schließlich zeigt Fig. 15 ein Flugzeug 76, in dem eine Kabine 78 angeordnet ist, in der eine Fachwerkstruktur 72 integriert sein kann. Damit könnten etwa Überkopf-Staufächer, Servicemodule und dergleichen an einer Struktur des Flugzeugs 76 befestigt werden.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Gelenkverbinder
- 4: Außenkäfig
- 6: erster Anschlussstab
- 8: erste Gelenkpfanne
- 10: erste Innenfläche
- 12: erste Außenfläche
- 14: Gleiteinrichtung
- 16: erster Außenkäfigabschnitt
- 18: zweiter Außenkäfigabschnitt
- 20: erste Öffnung
- 22: erste Innenrandfläche
- 24: Längsachse
- 26: zweite Öffnung
- 28: zweiter Anschlussstab
- 29: dritter Anschlussstab
- 30: Stoßdämpfer
- 32: Querbohrung
- 33: vierter Anschlussstab
- 34: vierte Gelenkpfanne
- 36: vierte Öffnung
- 38: Verschlussmechanismus
- 40: Keil
- 42: Verschlusskörper
- 43: Mittelachse
- 44: Rampenfläche
- 46: Verzahnungspaar
- 48: Innenverzahnung
- 50: Außenverzahnung
- 52: rohrförmige Erweiterung
- 54: Gelenkverbinder
- 56: Außenkäfig
- 58: erste Öffnung
- 59: erste Innenrandfläche
- 60: Gleitstückhalter
- 61: Anschlagspfanne
- 62: Ende
- 64: radiale Vertiefung
- 66: erste Einstecköffnung
- 68: zweite Einstecköffnung
- 70: Gleitstück
- 71: Gleiteinrichtung
- 72: Fachwerkstruktur
- 74: Fachwerkstab
- 75: Fachwerkstab / Diagonalstrebe
- 76: Flugzeug
- 78: Kabine / Innenraum

## Patentansprüche

1. Gelenkverbinder (2, 54) zum Verbinden mehrerer Bauteile in einer Struktur eines Verkehrsmittels (76), aufweisend:
einen Außenkäfig (4, 56),
mindestens zwei erste Anschlussstäbe (6), die jeweils an einem Ende eine erste Gelenkpfanne (8) aufweisen, und
eine Gleiteinrichtung (14, 71),
wobei der Außenkäfig (4, 56) mehrere erste Öffnungen (20, 58) aufweist, die in einer ersten gemeinsamen Ebene liegen und zum Durchführen der ersten Anschlussstäbe (6) von einer Innenseite des Außenkäfigs (4, 56) nach außen ausgebildet sind,
wobei die ersten Öffnungen (20, 58) derart dimensioniert sind, dass die ersten Gelenkpfannen (8) jeweils mit einer ersten Außenfläche (12) in einem bündigen Flächenkontakt mit einer ersten Innenrandfläche (22, 59) einer der ersten Öffnungen (20, 58) stehen,
wobei die Gleiteinrichtung (14, 71) dazu ausgebildet ist, einen bündigen Flächenkontakt mit ersten Innenflächen (10) der ersten Gelenkpfannen (8) einzugehen, sodass die bündigen Flächenkontakte mit den ersten Innenrandflächen (22, 59) gehalten werden.

2. Gelenkverbinder (2, 54) nach Anspruch 1,
wobei der Außenkäfig (4, 56) einen ersten Außenkäfigabschnitt (16) und einen zweiten Außenkäfigabschnitt (18) aufweist, die voneinander trennbar sind.

3. Gelenkverbinder (2, 54) nach Anspruch 1 oder 2,
wobei zwei aufeinanderfolgende erste Öffnungen (20, 58) jeweils einen Winkel von 90° in der ersten gemeinsamen Ebene zueinander einschließen.

4. Gelenkverbinder (2, 54) nach einem der vorhergehenden Ansprüche,
wobei der Außenkäfig (4, 56) mindestens eine zweite Öffnung (26) aufweist, die eine Öffnungsachse aufweist, welche schräg oder quer zu der ersten gemeinsamen Ebene liegt, und
wobei der Gelenkverbinder (2, 54) mindestens einen zweiten Anschlussstab (28) aufweist,
wobei die mindestens eine zweite Öffnung (26) zum Durchführen des mindestens einen zweiten Anschlussstabs (28) von einer Innenseite des Außenkäfigs (4, 56) nach außen ausgebildet ist, und
wobei die Gleiteinrichtung (14, 71) mit dem mindestens einen zweiten Anschlussstab (28) gekoppelt ist.

5. Gelenkverbinder (2, 54) nach Anspruch 4
wobei der mindestens eine zweite Anschlussstab (28) an einem Ende eine zweite Gelenkpfanne aufweist,
wobei die mindestens eine zweite Öffnung (26) derart dimensioniert ist, dass die betreffende zweite Gelenkpfanne mit einer zweiten Außenfläche in einem bündigen Flächenkontakt mit einer zweiten Innenrandfläche der mindestens einen zweiten Öffnung (26) steht, und
wobei die Gleiteinrichtung (14, 71) dazu ausgebildet ist, einen bündigen Flächenkontakt mit zweiten Innenflächen der zweiten Gelenkpfannen einzugehen, sodass die bündigen Flächenkontakte mit den zweiten Innenrandflächen gehalten werden.

6. Gelenkverbinder (2, 54) nach einem der vorhergehenden Ansprüche,
wobei die Gleiteinrichtung (14, 71) mit mindestens einem dritten Anschlussstab (29) verbunden ist, und
wobei der dritte Anschlussstab (29) einen Winkel zwischen 20° und 160° mit der ersten gemeinsamen Ebene einschließt und sich durch eine dritte Öffnung des Außenkäfigs (4, 56) nach außen erstreckt.

7. Gelenkverbinder (2, 54) nach einem der vorhergehenden Ansprüche,
wobei die ersten Innenflächen (10) sphärisch geformt sind, und
wobei eine äußere Oberfläche der Gleiteinrichtung (14, 71) an die ersten Innenflächen (14, 71) angepasst ist, sodass eine Relativbewegung der ersten Innenflächen (10) auf der äußeren Oberfläche der Gleiteinrichtung (14, 71) ermöglicht ist.

8. Gelenkverbinder (2, 54) nach einem der vorhergehenden Ansprüche,
ferner aufweisend mindestens einen vierten Anschlussstab (33), der an einem Ende eine vierte Gelenkpfanne (34) aufweist, und
wobei die vierte Gelenkpfanne (34) von einer der ersten Gelenkpfannen (8) und dem Außenkäfig (4, 56) umschlossen ist und der vierte Anschlussstab (33) sich durch eine vierte Öffnung (36) nach außen erstreckt.

9. Gelenkverbinder (2, 54) nach Anspruch 1,
wobei der Außenkäfig (4, 56) einstückig ausgebildet ist und mindestens eine erste Einstecköffnung (66) aufweist, durch die die ersten Anschlussstäbe (6) mit den ersten Gelenkpfannen (8) einführbar und in erste Öffnungen (20, 58) steckbar sind.

10. Gelenkverbinder (2, 54) nach Anspruch 9,
wobei der Außenkäfig (4, 56) zumindest bereichsweise kugelförmig ausgebildet ist.

11. Gelenkverbinder (2, 54) nach Anspruch 9 oder 10,
wobei die Gleiteinrichtung (14, 71) einen Gleitstückhalter (60) aufweist, der durch die mindestens eine erste Einstecköffnung (66) in den Außenkäfig (4, 56) steckbar ist,
wobei für jeden ersten Anschlussstab (6) ein Gleitstück (70) vorgesehen ist, das in eine korrespondierend angeordnete radiale Vertiefung (64) des Gleitstückhalters (60) einsteckbar ist, und
wobei der Außenkäfig (4, 56) mindestens eine zweite Einstecköffnung (68) aufweist, durch die die Gleitstücke (70) nacheinander unter Rotation des Gleitstückhalters (60) in die radialen Vertiefungen (64) steckbar sind, um sie mit den ersten Innenflächen (10) der ersten Gelenkpfannen (8) in Flächenkontakt zu bringen.

12. Gelenkverbinder (2, 54) nach Anspruch 11,
wobei der Gleitstückhalter (60) ein weitgehend quaderförmiges Ende (62) aufweist, welches Außenflächen aufweist, in denen die radialen Vertiefungen (64) angeordnet sind.

13. Fachwerkstruktur (72) für einen Innenraum (78) eines Verkehrsmittels, aufweisend mindestens einen Gelenkverbinder (2, 54) nach einem der vorhergehenden Ansprüche und mehrere Bauteile in Form von Fachwerkstäben (74, 75), die an dem mindestens einen Gelenkverbinder (2, 54) zum Ausbilden der Fachwerkstruktur (72) angeordnet sind.

14. Verkehrsmittel (76) mit einem Innenraum (78) und mindestens einer darin angeordneten Fachwerkstruktur (72) nach Anspruch 13, wobei mindestens ein Einbauteil an der Fachwerkstruktur angeordnet ist.

15. Verkehrsmittel (76) nach Anspruch 14, wobei das Einbauteil ein Über-Kopf-Staufach oder ein anderes Einbaumodul ist.

## Claims

1. Joint connector (2, 54) for connecting multiple components in a structure of a means of transport (76), having:
an outer cage (4, 56),
at least two first connection rods (6), each of which has a first joint socket (8) at one end, and
a sliding device (14, 71),
wherein the outer cage (4, 56) has multiple first openings (20, 58) which lie in a first common plane and are configured for through-passage of the first connection rods (6) from an inner side of the outer cage (4, 56) outwards,
wherein the first openings (20, 58) are dimensioned in such a way that the first joint sockets (8) are each in flush areal contact by way of a first outer surface (12) with a first inner-edge surface (22, 59) of one of the first openings (20, 58),
wherein the sliding device (14, 71) is configured to form flush areal contact with first inner surfaces (10) of the first joint sockets (8) such that the flush areal contact with the first inner-edge surfaces (22, 59) is maintained.

2. Joint connector (2, 54) according to Claim 1, wherein the outer cage (4, 56) has a first outer-cage portion (16) and a second outer-cage portion (18), which are separable from one another.

3. Joint connector (2, 54) according to Claim 1 or 2, where two successive first openings (20, 58) in each case include an angle of 90° to one another in the first common plane.

4. Joint connector (2, 54) according to one of the preceding claims,
wherein the outer cage (4, 56) has at least one second opening (26) having an opening axis which is oblique or transverse in relation to the first common plane, and
wherein the joint connector (2, 54) has at least one second connection rod (28),
wherein the at least one second opening (26) is configured for through-passage of the at least one second connection rod (28) from an inner side of the outer cage (4, 56) outwards, and
wherein the sliding device (14, 71) is coupled to the at least one second connection rod (28).

5. Joint connector (2, 54) according to Claim 4,
wherein the at least one second connection rod (28) has a second joint socket at one end,
wherein the at least one second opening (26) is dimensioned in such a way that the respective second joint socket is in flush areal contact by way of a second outer surface with a second inner-edge surface of the at least one second opening (26), and
wherein the sliding device (14, 71) is configured to form flush areal contact with second inner surfaces of the second joint sockets such that the flush areal contact with the second inner-edge surfaces is maintained.

6. Joint connector (2, 54) according to one of the preceding claims,
wherein the sliding device (14, 71) is connected to at least one third connection rod (29), and
wherein the third connection rod (29) includes an angle between 20° and 160° with the first common plane and extends outwards through a third opening of the outer cage (4, 56).

7. Joint connector (2, 54) according to one of the preceding claims,
wherein the first inner surfaces (10) are spherical shapes, and
wherein an outer surface of the sliding device (14, 71) is adapted to the first inner surfaces (14, 71) such that a relative movement of the first inner surfaces (10) on the outer surface of the sliding device (14, 71) is made possible.

8. Joint connector (2, 54) according to one of the preceding claims,
further having at least one fourth connection rod (33) which has a fourth joint socket (34) at one end, and
wherein the fourth joint socket (34) is enclosed by one of the first joint sockets (8) and the outer cage (4, 56) and the fourth connection rod (33) extends outwards through a fourth opening (36).

9. Joint connector (2, 54) according to Claim 1,
wherein the outer cage (4, 56) is formed in one piece and has at least one first plug-in opening (66) by way of which the first connection rods (6), including the first joint sockets (8), are introducible and are pluggable into first openings (20, 58).

10. Joint connector (2, 54) according to Claim 9,
wherein the outer cage (4, 56) has the form of a sphere at least in regions.

11. Joint connector (2, 54) according to Claim 9 or 10,
wherein the sliding device (14, 71) has a sliding-piece holder (60) which is pluggable into the outer cage (4, 56) through the at least one first plug-in opening (66), wherein, for each first connection rod (6), provision is made of a sliding piece (70) which is pluggable into a correspondingly arranged radial depression (64) of the sliding-piece holder (60), and
wherein the outer cage (4, 56) has at least one second plug-in opening (68) through which the sliding pieces (70) are successively pluggable into the radial depressions (64), with rotation of the sliding-piece holder (60), in order to bring them into areal contact with the first inner surfaces (10) of the first joint sockets (8).

12. Joint connector (2, 54) according to Claim 11,
wherein the sliding-piece holder (60) has a largely cuboidal end (62) having outer surfaces in which the radial depressions (64) are arranged.

13. Framework structure (72) for an interior space (78) of a means of transport, having at least one joint connector (2, 54) according to one of the preceding claims and multiple components in the form of framework rods (74, 75) that are arranged on the at least one joint connector (2, 54) to form the framework structure (72).

14. Means of transport (76) having an interior space (78) and having at least one framework structure (72) according to Claim 13 arranged therein, wherein at least one in-built part is arranged on the framework structure.

15. Means of transport (76) according to Claim 14, wherein the in-built part is an overhead storage compartment or some other in-built module.

## Revendications

1. Connecteur articulé (2, 54) pour connecter plusieurs composants dans une structure d'un moyen de transport (76), présentant :
une cage extérieure (4, 56),
au moins deux premières barres de raccordement (6), qui présentent chacune un premier coussinet d'articulation (8) à une extrémité, et
un dispositif de coulissement (14, 71),
la cage extérieure (4, 56) présentant plusieurs premières ouvertures (20, 58) situées dans un premier plan commun et configurées pour le passage des premières barres de raccordement (6) vers l'extérieur depuis un côté intérieur de la cage extérieure (4, 56),
les premières ouvertures (20, 58) étant dimensionnées de telle sorte que les premiers coussinets d'articulation (8) se situent chacun avec une première surface extérieure (12) en contact de surface affleurant avec une première surface de bord intérieur (22, 59) d'une des premières ouvertures (20, 58),
le dispositif de coulissement (14, 71) étant configuré pour entrer en contact de surface affleurant avec des premières surfaces intérieures (10) des premiers coussinets d'articulation (8) de telle sorte que les contacts de surface affleurant sont maintenus avec les premières surfaces de bord intérieur (22, 59).

2. Connecteur articulé (2, 54) selon la revendication 1,
la cage extérieure (4, 56) présentant une première section de cage extérieure (16) et une deuxième section de cage extérieure (18) qui peuvent être séparées l'une de l'autre.

3. Connecteur articulé (2, 54) selon la revendication 1 ou 2,
deux premières ouvertures successives (20, 58) formant chacune un angle de 90° l'une par rapport à l'autre dans le premier plan commun.

4. Connecteur articulé (2, 54) selon l'une quelconque des revendications précédentes,
la cage extérieure (4, 56) présentant au moins une deuxième ouverture (26) qui présente un axe d'ouverture qui est oblique ou transversal par rapport au premier plan commun, et
le connecteur articulé (2, 54) présentant au moins une deuxième barre de raccordement (28),
l'au moins une deuxième ouverture (26) étant configurée pour le passage de l'au moins une deuxième barre de raccordement (28) vers l'extérieur depuis un côté intérieur de la cage extérieure (4, 56), et
le dispositif de coulissement (14, 71) étant couplé à l'au moins une deuxième barre de raccordement (28).

5. Connecteur articulé (2, 54) selon la revendication 4,
l'au moins une deuxième barre de raccordement (28) présentant un deuxième coussinet d'articulation à une extrémité,
l'au moins une deuxième ouverture (26) étant dimensionnée de telle sorte que le deuxième coussinet d'articulation concerné est en contact de surface affleurant avec une deuxième surface de bord intérieur de l'au moins une deuxième ouverture (26) par une deuxième surface extérieure, et
le dispositif de coulissement (14, 71) étant configuré pour entrer en contact de surface affleurant avec des deuxièmes surfaces intérieures des deuxièmes coussinets d'articulation, de telle sorte que les contacts de surface affleurant sont maintenus avec les deuxièmes surfaces de bord intérieur.

6. Connecteur articulé (2, 54) selon l'une quelconque des revendications précédentes,
le dispositif de coulissement (14, 71) étant connecté à au moins une troisième barre de raccordement (29), et la troisième barre de raccordement (29) formant un angle compris entre 20° et 160° avec le premier plan commun et s'étend vers l'extérieur à travers une troisième ouverture de la cage extérieure (4, 56).

7. Connecteur articulé (2, 54) selon l'une quelconque des revendications précédentes,
les premières surfaces intérieures (10) étant de forme sphérique, et
une surface extérieure du dispositif de coulissement (14, 71) étant adaptée aux premières surfaces intérieures (14, 71) de manière à permettre un mouvement relatif des premières surfaces intérieures (10) sur la surface extérieure du dispositif de coulissement (14, 71).

8. Connecteur articulé (2, 54) selon l'une quelconque des revendications précédentes,
présentant en outre au moins une quatrième barre de raccordement (33) qui présente une quatrième coussinet d'articulation (34) à une extrémité, et
le quatrième coussinet d'articulation (34) étant entouré par l'un des premiers coussinets d'articulation (8) et la cage extérieure (4, 56), et la quatrième barre de raccordement (33) s'étendant vers l'extérieur à travers une quatrième ouverture (36).

9. Connecteur articulé (2, 54) selon la revendication 1,
la cage extérieure (4, 56) étant configurée d'une seule pièce et présentant au moins une première ouverture d'insertion (66) à travers laquelle les premières barres de raccordement (6) avec les premiers coussinets d'articulation (8) peuvent être introduites et enfichées dans des premières ouvertures (20, 58).

10. Connecteur articulé (2, 54) selon la revendication 9,
la cage extérieure (4, 56) étant configurée sous forme sphérique au moins par zones.

11. Connecteur articulé (2, 54) selon la revendication 9 ou 10,
le dispositif de coulissement (14, 71) présentant un support de pièce coulissante (60) qui peut être enfiché dans la cage extérieure (4, 56) à travers l'au moins une première ouverture d'insertion (66),
pour chaque première barre de raccordement (6), il étant prévu une pièce coulissante (70) qui peut être insérée dans un renfoncement radial (64) agencé de manière correspondante du support de pièce coulissante (60), et
la cage extérieure (4, 56) présentant au moins une deuxième ouverture d'insertion (68) à travers laquelle les pièces coulissantes (70) peuvent être enfichées successivement dans les renfoncements radiaux (64) en faisant tourner le support de pièce coulissante (60),
afin de les amener en contact de surface avec les premières surfaces intérieures (10) des premiers coussinets d'articulation (8).

12. Connecteur articulé (2, 54) selon la revendication 11,
le support de pièce coulissante (60) présentant une extrémité essentiellement parallélépipédique (62) qui présente des surfaces extérieures dans lesquelles sont agencés les renfoncements radiaux (64).

13. Structure de treillis (72) pour un espace intérieur (78) d'un moyen de transport, présentant au moins un connecteur articulé (2, 54) selon l'une quelconque des revendications précédentes et plusieurs composants sous forme de barres de treillis (74, 75) qui sont agencés sur l'au moins un connecteur articulé (2, 54) pour configurer la structure de treillis (72).

14. Moyen de transport (76) avec un espace intérieur (78) et au moins une structure de treillis (72) selon la revendication 13 agencée dans celui-ci, au moins une pièce de montage étant agencée sur la structure de treillis.

15. Moyen de transport (76) selon la revendication 14, dans lequel la pièce de montage est un compartiment de rangement au-dessus de la tête ou un autre module de montage.
